# EUROPÄISCHE PATENTANMELDUNG

(11) **EP 3 015 440 A1**
(43) Veröffentlichungstag der Anmeldung: **04.05.2016**
(21) Anmeldenummer: 14401103.8
(22) Anmeldetag: 30.10.2014
(51) Int. Cl.: C04B 35/634, B22D 11/10, C04B 35/66

(54) **Bindemittel für ein Korngemisch**

(71) Anmelder: Magnesita Refractories GmbH, 40724 Hilden (DE)
(72) Erfinder: Gueguen, Ewan, Dr., 1495 Sart-Dames-Avelines (BE); DucastelDescloitres, Antoine, 44263 Dortmund (DE); Vleeshouwers, Wolfgang, 46535 Dinslaken (DE)
(74) Vertreter: Köchling, Conrad-Joachim

(57) **Zusammenfassung**

Die Erfindung betrifft ein Bindemittel für ein Korngemisch oder Granulatgemisch, wobei das Bindemittel aus der Gruppe von Paraffin-Wachsen ausgewählt ist und in einer Menge zur Verfügung gestellt ist, die ausreicht, das Gemisch nach Erwärmung zu binden.

## Beschreibung

Die Erfindung betrifft ein Bindemittel für ein Korngemisch oder Granulatgemisch sowie ein feuerfestes Auskleidungsmaterial oder Verschleißfutter für Gießpfannen, ein Verfahren zur Herstellung einer solchen Auskleidung sowie die Verwendung des Bindemittels zur Herstellung einer trockenen Auskleidung.

Aus der WO 94/10102 ist ein trockenes Bindemittel für ein Korngemisch oder Granulatgemisch für metallurgische Zwecke bekannt. Ebenso ist aus dieser Druckschrift ein feuerfestes Auskleidungsmaterial oder Verschleißfutter für Gießpfannen oder dergleichen, insbesondere Tundishs bekannt. Auch ist in dieser Druckschrift ein Verfahren zur Herstellung einer solchen Auskleidung beschrieben.

Im Stand der Technik sind feuchte Bindemittel zu dem angegebenen Zweck bekannt. Die Nachteile dieser feuchten Bindemittel sind in der genannten Druckschrift angegeben. Des Weiteren sind im Stand der Technik Bindemittel auf Basis von Kunststoffen bekannt. Diese Bindemittel haben den Effekt, dass sie beim Einbau der entsprechenden Gemische als Ausfütterung ausdampfen und giftige Dämpfe entwickeln, was sehr nachteilig ist.

Aus der angegebenen Druckschrift ist ferner bekannt, als Bindemittel Zucker einzusetzen. Ein solches Bindemittel ist umweltfreundlicher als die vorgenannten Kunststoffe, jedoch entsteht hierbei eine erhebliche Geruchsbelastung.

Ausgehend von diesem Stand der Technik liegt der Erfindung die Aufgabe zugrunde, ein Bindemittel angegebener Art sowie ein feuerfestes Auskleidungsmaterial angegebener Art, ein Verfahren zur Herstellung einer Auskleidung und eine neue Verwendung zu schaffen, bei der Geruchsbildungen beim Einbau oder nach dem Einbau des Auskleidungsmaterials weitestgehend vermieden sind, wobei der Erfindung zudem die Aufgabe zugrunde liegt, neue Bindemittel als Alternative zu bestehenden Bindemitteln zur Verfügung zu stellen.

Zur Lösung dieser Aufgabe schlägt die Erfindung ein Bindemittel für ein Korngemisch oder Granulatgemisch vor, wobei das Bindemittel aus der Gruppe von Paraffin-Wachsen ausgewählt ist und in einer Menge zur Verfügung gestellt ist, die ausreicht, das Gemisch nach Erwärmung zu binden.

Hierbei ist besonders bevorzugt vorgesehen, dass das Bindemittel aus Paraffinen in Form von Hartwachsen besteht.

Des Weiteren ist bevorzugt vorgesehen, dass das Gemisch aus einer Körnung aus Magnesit, gebranntem Magnesit, Dolomit, gebranntem Dolomit, Aluminiumoxid, Kieselerde, Zirkon, Kieselerde-Zirkon-Mischung, Bauxit, Graphit und/oder Kombinationen daraus besteht.

Ganz besonders bevorzugt ist der Einsatz von Magnesit.

Zudem ist bevorzugt vorgesehen, dass das Korn- oder Granulatgemisch eine Körnung von 1 bis 3 mm aufweist.

Eine besonders bevorzugte Ausbildung wird darin gesehen, dass das Paraffin-Wachs einen Schmelzpunkt von mindestens 105 °C und höchstens 140 °C ± einer Toleranz von 5 °C hat.

Die Temperaturauswahl ist deswegen von besonderer Bedeutung, weil der Erweichungsbereich des Paraffin-Wachses so hoch sein soll, dass keine Gefahr besteht, dass das entsprechend mit Korngemischen oder Granulatgemischen gemischte Paraffin-Wachs zur Verklebung der Einzelbestandteile beim Lagern des Produktes führt. Die obere Grenze ist so hoch gewählt, dass sie in jedem Falle unterhalb der Behandlungstemperatur beim Auskleiden eines Tundish, einer Gießwanne oder einer Zwischenpfanne liegt, wobei aber sichergestellt sein muss, dass eine vorzügliche Aufschmelzung des Paraffin-Wachses bei der Behandlungstemperatur von ca. 180 °C bis 200 °C vorliegt.

Gegenstand der Erfindung ist ferner ein feuerfestes Auskleidungsmaterial oder Verschleißfutter für Gießpfannen, -tröge, Schmelzrinnen, -gefäße, bestehend aus einem Korngemisch oder Granulatgemisch sowie Bindemittel gemäß einem der Ansprüche 1 bis 5, wobei das Auskleidungsmaterial zusätzlich zur Körnung des Gemisches und zusätzlich zum Paraffin-Wachs Mehl aus dem Material gemäß Anspruch 3 sowie Sinterhilfsmittel aufweist.

Bevorzugt ist dabei vorgesehen, dass als Sinterhilfsmittel Borsäure zugesetzt ist.

Des Weiteren ist Gegenstand der Erfindung ein Verfahren zur Herstellung einer Auskleidung oder eines Verschleißfutters in oder an metallurgischen Behältern, mit folgenden Verfahrensschritten:
Herstellung einer Auskleidungsmasse aus Korn- oder Granulatgemisch;
Erwärmen des Korn- oder Granulatgemisches auf eine Temperatur, die höher ist als die Schmelztemperatur eines Paraffin-Wachses; Mischen des erwärmten Korn- oder Granulatgemisches mit Paraffin-Wachs, sodass die Körner des Gemisches überwiegend oder vollständig mit einer Paraffin-Schicht umhüllt sind; Einbringen dieser Mischung in den metallurgischen Behälter und Verteilen der Mischung auf der Innenwandung des Behälters unter Einwirkung von mechanischem Druck und Temperatur, sodass eine Auskleidung oder ein Futter mit einer Wandstärke von einigen Zentimetern gebildet wird;
Abkühlen des Erzeugnisses bis auf eine niedrigere Temperatur als 100 °C, vorzugsweise Raumtemperatur.

Dabei ist bevorzugt vorgesehen, dass die Temperatur beim Einbringen der Mischung auf etwa 200 °C bis 180 °C gehalten wird.

Schließlich ist Gegenstand der Erfindung eine Verwendung eines Bindemittels gemäß einem oder Ansprüche 1 bis 5 zur Herstellung eines trockenen Auskleidungsmaterials für metallurgische Zwecke sowie Verwendung einer Mischung aus Korn- oder Granulat-Gemisch und Paraffinwachsen gemäß Anspruch 6 oder Anspruch 7 zur Ausfütterung von metallurgischen Gefäßen, insbesondere Tundish.

Die Bestandteile des Korngemisches oder Granulatgemisches sind an sich im Stand der Technik bekannt, wozu auf die Eingangs beschriebene Druckschrift verwiesen wird. Auch die Verarbeitungsweise des mit Bindemittel versetzten Korngemisches oder Granulatgemisches zur Auskleidung von Gießpfannen, Gießtrögen, Schmelzrinnen, Schmelzgefäßen oder Tundishen ist ebenfalls im Stand der Technik an sich beschrieben. Auch das Prinzip der Verfahrensweise zur Herstellung der Auskleidung ist im Stand der Technik angegeben. Insofern wird in vollem Umfang auf die Offenbarung der Eingangs genannten Druckschrift verwiesen.

Durch die Erfindung wird ein neues Bindemittel zur Verfügung gestellt, welches gegenüber den herkömmlichen Bindemitteln wesentliche Vorteile aufweist, wobei insbesondere eine Geruchsbelästigung bei der Verarbeitung von mit dem Bindemittel vermengten Korngemischen und Granulatgemischen vermieden ist. Bei der Verarbeitung des Bindemittels mit dem Korngemisch oder Granulatgemisch wird das Bindemittel auf eine geeignete Erweichungstemperatur erwärmt, beispielsweise auf eine Temperatur höher als 105 °C. Das Korngemisch oder Granulatgemisch, welches vorzugsweise aus Magnesit besteht und vorzugsweise in einer Körnung von 1-3 mm vorgesehen ist, wird mit dem schmelzflüssigen Paraffin-Wachs umhüllt. Hierzu wird vorzugsweise das Korngemisch oder Granulatgemisch auf eine Temperatur von beispielsweise 200 °C erwärmt und dann mit dem Paraffin-Wachs in einem Mischer gemischt, wobei während der Mischung eine Temperatur von deutlich oberhalb 105 °C eingehalten wird. Anschließend kann diese fertige Mischung in einer Kühlstrecke abgekühlt werden, wobei dann das Korngemisch oder Granulatgemisch samt der Paraffin-Wachsumhüllung der Einzelkörner beispielsweise in 1000 kg-Säcke abgefüllt werden kann und gelagert werden kann. Aufgrund der Tatsache, dass das Paraffin-Wachs einen Erweichungsbereich hat, der oberhalb von 105 °C beginnt, wird vermieden, dass das fertig gemischte Material während der Lagerung verklebt.

Sofern das Material verarbeitet werden soll, also eine entsprechende Gießform oder dergleichen mit dem Material ausgekleidet werden soll, so wird das Material in die Gießform oder dergleichen, beispielsweise den Tundish eingebracht und auf dessen Wandung verteilt, wie dies in der WO 94/10102 beispielsweise angegeben ist. Die Schablone, mittels derer die Mischung verteilt und gegen die Wandung der Gießwanne oder dergleichen angedrückt wird, hat vorzugsweise eine Temperatur von ca. 200 °C, damit eine Erweichung des Paraffin-Wachses erfolgt und eine formfüllende Masse zur Verfügung steht, die an die Wandung der Gießform oder dergleichen angedrückt werden kann.

Nach dem Einbringen der Masse in die Gießform und dem Andrücken der Masse an die Wandung der Gießform kühlt die nun quasi monolithische Schicht bis auf Raumtemperatur ab. Das entsprechende Gießgefäß kann dann bestimmungsgemäß eingesetzt werden und mit schmelzflüssigem Material, insbesondere Stahl, befüllt werden. Die feuerfeste Auskleidung kann gegen Ende der jeweiligen Gießfrequenz entfernt und durch eine neue Auskleidung ersetzt werden.

Die Erfindung ist nicht auf die in den Ansprüchen angegebenen Merkmale beschränkt, sondern sämtliche Angaben auch aus der Beschreibung werden als erfindungswesentlich angesehen.

## Patentansprüche

1. Bindemittel für ein Korngemisch oder Granulatgemisch, wobei das Bindemittel aus der Gruppe von Paraffin-Wachsen ausgewählt ist und in einer Menge zur Verfügung gestellt ist, die ausreicht, das Gemisch nach Erwärmung zu binden.

2. Bindemittel nach Anspruch 1, **dadurch gekennzeichnet, dass** das Bindemittel aus Paraffinen in Form von Hartwachsen besteht.

3. Bindemittel nach einem der Ansprüche 1 oder 2, **dadurch gekennzeichnet, dass** das Gemisch aus einer Körnung aus Magnesit, gebranntem Magnesit, Dolomit, gebranntem Dolomit, Aluminiumoxid, Kieselerde, Zirkon, Kieselerde-Zirkon-Mischung, Bauxit, Graphit und/oder Kombinationen daraus besteht.

4. Bindemittel nach einem der Ansprüche 1 bis 3, **dadurch gekennzeichnet, dass** das Korn- oder Granulatgemisch eine Körnung von 1 bis 3 mm aufweist.

5. Bindemittel (1) nach einem der Ansprüche 1 bis 4, **dadurch gekennzeichnet, dass** das Paraffin-Wachs einen Schmelzpunkt von mindestens 105 °C und höchstens 140 °C ± einer Toleranz von 5 °C hat.

6. Feuerfestes Auskleidungsmaterial oder Verschleißfutter für Gießpfannen, -tröge, Schmelzrinnen, -gefäße bestehend aus einem Korngemisch oder Granulatgemisch sowie Bindemittel gemäß einem der Ansprüche 1 bis 5, wobei das Auskleidungsmaterial zusätzlich zur Körnung des Gemisches und zusätzlich zum Paraffin-Wachs Mehl aus dem Material gemäß Anspruch 3 sowie Sinterhilfsmittel aufweist.

7. Material nach Anspruch 6, **dadurch gekennzeichnet, dass** als Sinterhilfsmittel Borsäure zugesetzt ist.

8. Verfahren zur Herstellung einer Auskleidung oder eines Verschleißfutters in oder an metallurgischen Behältern, mit folgenden Verfahrensschritten:
Herstellung einer Auskleidungsmasse aus Korn- oder Granulatgemisch;
Erwärmen des Korn- oder Granulatgemisches auf eine Temperatur, die höher ist als die Erweichungs- oder Schmelztemperatur eines Paraffin-Wachses;
Mischen des erwärmten Korn- oder Granulatgemisches mit Paraffin-Wachs, sodass die Körner des Gemisches überwiegend oder vollständig mit einer Paraffin-Schicht umhüllt sind;
Einbringen dieser Mischung in den metallurgischen Behälter und Verteilen der Mischung auf der Innenwandung des Behälters unter Einwirkung von mechanischem Druck und Temperatur, sodass eine Auskleidung oder ein Futter mit einer Wandstärke von einigen Zentimetern gebildet wird;
Abkühlen des Erzeugnisses bis auf eine niedrigere Temperatur als 100 °C, vorzugsweise Raumtemperatur.

9. Verfahren nach Anspruch 8, wobei die Temperatur beim Einbringen der Mischung auf etwa 200 °C bis 180 °C gehalten wird.

10. Verwendung eines Bindemittels gemäß einem oder Ansprüche 1 bis 5 zur Herstellung eines trockenen Auskleidungsmaterials für metallurgische Zwecke sowie Verwendung einer Mischung aus Korn- oder Granulat-Gemisch und Paraffinwachsen gemäß Anspruch 6 oder Anspruch 7 zur Ausfütterung von metallurgischen Gefäßen, insbesondere Tundish.
